# EUROPÄISCHE PATENTANMELDUNG

(11) **EP 3 617 535 A1**
(43) Veröffentlichungstag der Anmeldung: **04.03.2020**
(21) Anmeldenummer: 19000375.6
(22) Anmeldetag: 16.08.2019
(51) Int. Cl.: F16B 33/00, F16B 43/00, F16B 5/02

(54) **SCHRAUBENGARNITUR FÜR ALUMINIUMKONSTRUKTIONEN UND -TRAGWERKE IM ALUMINIUMBAU**

(30) Priorität: 27.08.2018 DE 102018006715
(71) Anmelder: ESKA Automotive GmbH, 09126 Chemnitz (DE)
(72) Erfinder: Lettmann, Joachim, 01099 Dresden (DE)
(74) Vertreter: Patentanwälte Findeisen Neumann Scheit Partnerschaft mbB

(57) **Zusammenfassung**

Die Erfindung betrifft eine Schraubengarnitur für Aluminiumkonstruktionen und -tragwerke im Aluminiumbau, wobei die Schraubengarnitur, mit der die Konstruktions- oder Tragwerkselemente miteinander verbunden werden, aus einer Schraube, die einen Kopf mit einem Kraftangriff und einen mit einem Gewindeabschnitt ausgestatteten Schaft besteht, dabei vom Schaft mindestens eine Unterlegscheibe getragen wird, die der Mutter und/oder dem Kopf der Schraube beigeordnet ist, die Mutter mit einem Kraftangriff ausgeführt und auf dem Gewindeabschnitt des Schaftes der Schraube aufschraubbar ausgebildet ist, so dass die Konstruktions- oder Tragwerkselemente zwischen dem Kopf und der Mutter in Verbindung mit der Unterlegscheibe unabhängig vom Reibungseinfluss der verspannten Bauteiloberflächen vorgespannt sicherbar sind.

Während es Aufgabe der Erfindung ist, eine vorspannbare Schraubengarnitur vorzuschlagen, bei der auf unterschiedliche Wärmeausdehnungskoeffizienten und eine Kontaktkorrosion gegenüber den Aluminiumkonstruktionen und -tragwerken verzichtet und eine konsequente Durchsetzung der Leichtbauweise im Aluminiumbau ermöglicht werden kann, wird diese dadurch gelöst, dass die Schraubengarnitur (1), also die Schraube (3), die Unterlegscheibe (7) und die Mutter (8) aus Aluminium oder einer Aluminiumlegierung bestehend ausgestaltet sind.

## Beschreibung

Die Erfindung betrifft eine Schraubengarnitur für Aluminiumkonstruktionen und -tragwerke im Aluminiumbau, wobei die Schraubengamitur, mit der die Konstruktions- oder Tragwerkselemente miteinander verbunden werden, aus einer Schraube, die einen Kopf mit einem Kraftangriff und einen mit einem Gewindeabschnitt ausgestatteten Schaft besteht, dabei vom Schaft mindestens eine Unterlegscheibe getragen wird, die der Mutter und/oder dem Kopf der Schraube beigeordnet ist, die Mutter mit einem Kraftangriff ausgeführt und auf dem Gewindeabschnitt des Schaftes der Schraube aufschraubbar ausgebildet ist, so dass die Konstruktions- oder Tragwerkselemente zwischen dem Kopf und der Mutter in Verbindung mit der Unterlegscheibe unabhängig vom Reibungseinfluss der verspannten Bauteiloberflächen vorgespannt sicherbar sind.

Anwendung findet die Erfindung vorzugsweise für Konstruktionen und Tragwerke im Aluminiumbau, wobei die einzelnen Konstruktionsteile und Tragwerke mittels Schraubengarnituren verbunden werden.

Dazu ist es im Aluminiumbau bekannt, neben Grundformen von Schraubenverbindungen auch genormte Sonderformen zu verwenden. Zu letzteren zählen die hochfest vorzuspannenden Verbindungen, kurz HV- oder HR-Verbindungen nach DIN EN 14399 in den Festigkeitsklassen 8.8 und 10.9. Diese machen einen Großteil der Verbindungen im Aluminiumbau aus. Ihr vorwiegender Einsatzbereich ist auf die Befestigung von Bauteilen mit vorwiegend dynamischer Beanspruchung ausgerichtet.

Bei ruhender Beanspruchung ist beispielsweise der Einsatz folgender Formen von Verschraubungen bekannt:
- Stahlschrauben (4.6 - 10.9 gemäß DIN EN ISO 898-1)
- Aluminium Schrauben AL1 - AL3 (Der Einsatz erfolgt hier nur bei Lochleibungsverbindungen)
- Nichtrostende Stahlschrauben A2 / A4

Bei nicht vorwiegend ruhender, d.h. bei dynamischer Beanspruchung, besteht die Forderung, diese HV- oder HR-Schraubverbindungen vorzuspannen. Das Vorspannen von HV- oder HR-Schraubengarnituren kann durch ein Drehmoment-Vorspannverfahren, ein Drehimpuls-Vorspannverfahren oder ein Drehwinkel-Vorspannverfahren erfolgen. Auch Kombinationen dieser Verfahren werden eingesetzt. Dabei erfolgt das Anziehen üblicherweise über das Mutternelement, wo beim Anziehen der Mutter sicherzustellen ist, dass ein Mitdrehen der Schraube relativ zum Bauteil unterbunden wird. Für diese vorzuspannenden Verbindungen dürfen nur Stahlschrauben der Festigkeitsklasse 8.8 und 10.9 nach DIN EN 14399 eingesetzt werden.

Die Nachteile dieser Lösung bestehen darin, dass bei deren Einsatz Vorspannkraftverluste durch ungünstige Werkstoffkombinationen aufgrund unterschiedlicher Wärmeausdehnungskoeffizienten (Schraubengarnitur aus Stahl i.V. mit Konstruktionen und Tragwerke aus Aluminium) in Erscheinung treten können, eine Kontaktkorrosion durch ungünstige Werkstoffpaarungen (z.B. Stahl und Aluminium) unvermeidbar, sowie eine konsequente Verfolgung der Leichtbauweise im Aluminiumbau nicht durchsetzbar ist.

Aufgabe der Erfindung ist es, eine vorspannbare Schraubengarnitur vorzuschlagen, bei der auf unterschiedliche Wärmeausdehnungskoeffizienten und eine Kontaktkorrosion gegenüber den Aluminiumkonstruktionen und -tragwerken verzichtet und eine konsequente Durchsetzung der Leichtbauweise im Aluminiumbau ermöglicht werden kann.

Diese Aufgabe wird erfindungsgemäß bei einer gattungsgemäßen Schraubengarnitur mit den Merkmalen des Anspruchs 1 dadurch gelöst, dass die Schraubengarnitur, also die Schraube, die Unterlegscheibe/Unterlegscheiben und die Mutter aus Aluminium oder einer Aluminiumlegierung bestehen.

Die Vorteile der Erfindung bestehen darin, dass durch die ebenfalls erfolgende Ausgestaltung der Schraubengarnitur aus Aluminium oder einer Aluminiumlegierung i.V. mit den Aluminiumkonstruktions- oder -tragwerkselementen, einerseits Vorspannkraftverluste durch gleichartige Werkstoffkombinationen und damit eines einheitlichen Wärmeausdehnungskoeffizienten vermieden, sowie andererseits eine Kontaktkorrosion zwischen den beteiligten Bauteilen wirksam unterbunden und eine auf den durchgängigen Aluminiumbau beruhende Leichtbauweise durchgesetzt werden kann.

Vorteilhafte Weiterbildungen der Erfindung gehen aus Patentansprüchen 2 bis 6 hervor. Dabei hat die Ausgestaltung nach Anspruch 2 den Vorteil, dass große Vorspannkraftverluste vermieden werden.

Die Fortbildungen nach den Ansprüchen 3 und bewirken, dass die konsequente Leichtbauweise durchgesetzt werden kann.

Durch die nach Anspruch 5 erfolgende Weiterbildung der Erfindung wird erreicht, dass Korrosionserscheinungen vermieden werden.

Letztlich ermöglicht die Ausgestaltung nach Anspruch 6, dass eine nachhaltige Dauerhaltbarkeit sichergestellt ist.

Die Erfindung soll nachfolgend an einem Ausführungsbeispiel und einer zugehörigen Zeichnung näher erläutert werden.

Es zeigen:
- Fig. 1: eine Schnittdarstellung der erfindungsgemäßen Schraubengarnitur
- Fig. 2: eine weitere Schnittdarstellung der erfindungsgemäßen Schraubengarnitur mit der Einzelheit "X"
- Fig. 3: eine Draufsicht des mit einem als Sechskant ausgestatteten Kopfes der Schraube
- Fig. 4: eine Draufsicht der mit einem als Sechskant ausgebildeten Mutter
- Fig. 5: eine Draufsicht des mit einem als Innensechsrund ausgeführten Kopfes der Schraube
- Fig. 6: eine Draufsicht des mit einem als Innensechskant versehenen Kopfes der Schraube
- Fig. 7: eine Draufsicht des mit einem als Außenzwölfkant ausgestatteten Kopfes der Schraube
- Fig. 8: eine Draufsicht des mit einem als Außensechsrund ausgebildeten Kopfes der Schraube
- Fig. 9: eine Draufsicht der mit einem als Außenzwölfkant ausgebildeten Mutter
- Fig. 10: eine Draufsicht der mit einem als Außensechsrund versehenen Mutter

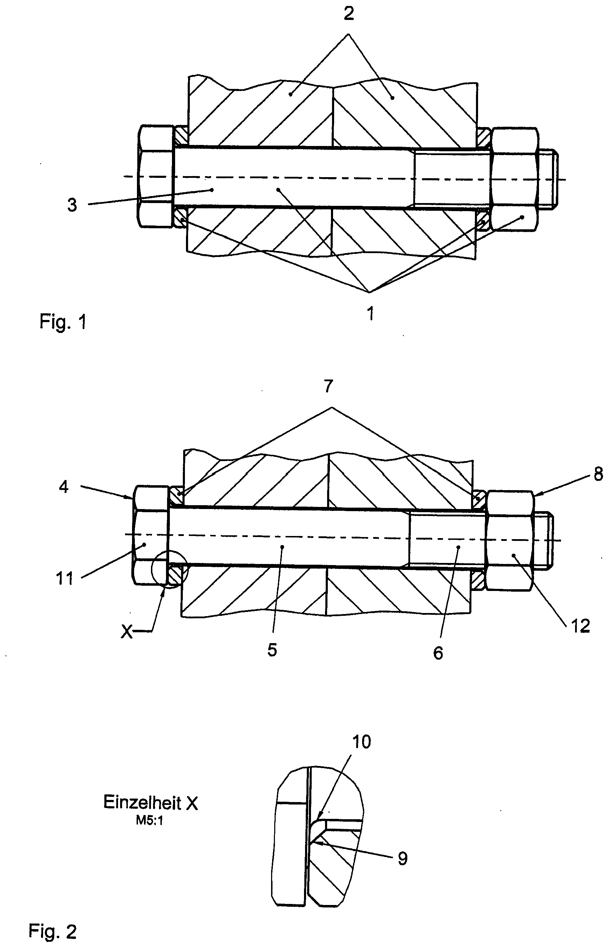

In der Figur 1 ist eine Schraubengarnitur 1 dargestellt, mittels der beispielsweise zwei Konstruktions- oder Tragwerkselemente 2 beim Aluminiumbau vorgespannt miteinander verbunden werden können. Diese Schraubengarnitur 1 beinhaltet eine Schraube 3, die nach Fig. 2 aus einem Kopf 4 mit vorzugsweise einem als Sechskant 11 ausgestalteten Kraftangriff, und einem Schaft 5 besteht, wobei dem Schaft 5 ein Gewindeabschnitt 6 zugeordnet ist. Auf dem Schaft 5 der Schraube 3 sind vorteilhafterweise zwei Unterlegscheiben 7 befindlich, die dem Kopf 4 bzw. einer Mutter 8 beigeordnet sind. Dabei ist die Mutter 8 vorzugsweise mit einem als Sechskant 12 ausgebildeten Kraftangriff ausgeführt und auf dem Gewindeabschnitt 6 des Schaftes 5 der Schraube 3 aufschraubbar ausgebildet, so dass die beiden Konstruktions- oder Tragwerkselemente 2 zwischen dem Kopf 4 mit Unterlegscheibe 7 und der Mutter 8 mit Unterlegscheibe 7 vorgespannt miteinander verbindbar und sicherbar sind. Diese Schraubengarnitur 1, also die Schraube 3, die Unterlegscheiben 7 und die Mutter 8, sind aus Aluminium oder einer Aluminiumlegierung bestehend ausgestaltet.

Mechanische Eigenschaften der Aluminiumschraubengarnitur:
1. (jeweils für alle Elemente der Aluminiumschraubengarnitur)
   - EN AW-2024 (DIN EN 573-3) T6
   - Mindestzugfestigkeit Rm = 425 N/mm²
   - Dehngrenze Rp0,2 = 345 N/mm²
   - A5% > 5
oder 2. (jeweils für alle Elemente der Aluminiumschraubengarnitur)
   - EN AW-6056 (DIN EN 573-3) T6
   - Mindestzugfestigkeit Rm = 410 N/mm²
   - Dehngrenze Rp0,2 = 350 N/mm²
   - A5% > 7
oder 3. (jeweils für alle Elemente der Aluminiumschraubengarnitur)
   - EN AW-7075 (DIN EN 573-3) T76
   - Mindestzugfestigkeit Rm = 510 N/mm²
   - Dehngrenze Rp0,2 = 440 N/mm²
   - A5% > 7

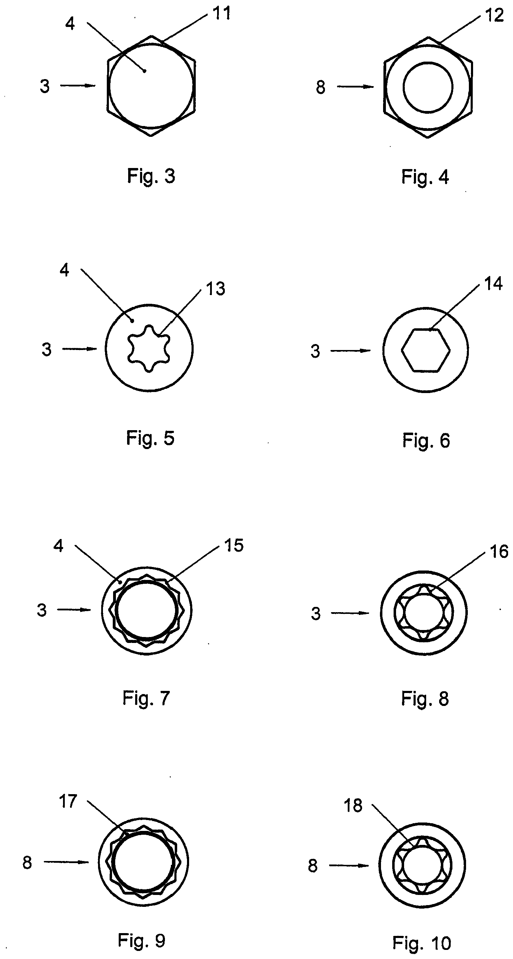

Anstelle des als Sechskant 11 bzw. 12 ausgeführten Kraftangriffs am Kopf 4 der Schraube 3 bzw. an der Mutter 8, kann dieser in vorteilhafter Ausgestaltung der Erfindung auch in anderer Geometrie, z.B. als Innensechsrund 13 (Fig. 5), Innensechskant 14 (Fig. 6), Außenzwölfkant 15 (Fig. 7) oder Außensechsrund 16 (Fig. 8) für die Schraube 3 oder Außenzwölfkant 17 (Fig. 9) oder Außensechsrund 18 (Fig. 10) für die Mutter 8 ausgestaltet sein.

Eine weitere Fortbildung der Erfindung besteht darin, dass die dem Kopf 4 der Schraube 3 zugewandte Stirnseite der Unterlegscheibe 7 der Unterkopfgeometrie der Schraube 3 angepasst ist. D.h., ist die Unterkopfgeometrie der Schraube 3 als Radius 10 ausgebildet, dann ist die Unterlegscheibe 7 an der zugewandten Stirnseite mit einer entsprechenden Fase 9 versehen, so dass die Scheibe nicht im Radius 10 aufliegt.

### Aufstellung der verwendeten Bezugszeichen

- 1: Schraubengarnitur
- 2: Konstruktions- oder Tragwerkselemente
- 3: Schraube
- 4: Kopf mit Kraftangriff an 3
- 5: Schaft an 3
- 6: Gewindeabschnitt an 3
- 7: Unterlegscheibe
- 8: Mutter
- 9: Fase an 7
- 10: Radius an 3
- 11: Sechskant an 3 von 4
- 12: Sechskant an 8
- 13: Innensechsrund 3 von 4
- 14: Innensechskant 3 von 4
- 15: Außenzwölfkant 3 von 4
- 16: Außensechsrund 3 von 4
- 17: Außenzwölfkant an 8
- 18: Außensechsrund an 8

## Patentansprüche

1. Schraubengarnitur für Aluminiumkonstruktionen und -tragwerke im Aluminiumbau, wobei die Schraubengamitur, mit der die Konstruktions- oder Tragwerkselemente miteinander verbunden werden, aus einer Schraube, die einen Kopf mit einem Kraftangriff und einen mit einem Gewindeabschnitt ausgestatteten Schaft besteht, dabei vom Schaft mindestens eine Unterlegscheibe getragen wird, die der Mutter und/oder dem Kopf der Schraube beigeordnet ist, die Mutter mit einem Kraftangriff ausgeführt und auf dem Gewindeabschnitt des Schaftes der Schraube aufschraubbar ausgebildet ist, so dass die Konstruktions- oder Tragwerkselemente zwischen dem Kopf und der Mutter in Verbindung mit der Unterlegscheibe unabhängig vom Reibungseinfluss der verspannten Bauteiloberflächen während des Montagevorganges vorgespannt sicherbar sind,
**dadurch gekennzeichnet,**
**dass** die Schraubengarnitur (1), also die Schraube (3), die Unterlegscheibe (7) und die Mutter (8) aus Aluminium oder einer Aluminiumlegierung bestehend ausgestaltet sind.

2. Schraubengarnitur für Aluminiumkonstruktionen und -tragwerke im Aluminiumbau nach Anspruch 1,
**dadurch gekennzeichnet,**
**dass** jeweils für alle Elemente der Aluminiumschraubengarnitur die Aluminiumlegierung als
1.
- EN AW-2024 (DIN EN 573-3)
- Mindestzugfestigkeit Rm = N/mm²
- Dehngrenze Rp0,2 = N/mm²
- A5% >
oder
2.
- EN AW-6056 (DIN EN 573-3) - T6
- Mindestzugfestigkeit Rm = 410 N/mm²
- Dehngrenze Rp0,2 = 350 N/mm²
- A5% > 7
oder
3.
- EN AW-7075 (DIN EN 573-3) - T76
- Mindestzugfestigkeit Rm = 540 N/mm²
- Dehngrenze Rp0,2 = 485 N/mm²
- A5% > 7
ausgeführt ist.

3. Schraubengarnitur für Aluminiumkonstruktionen und -tragwerke im Aluminiumbau nach Anspruch 1,
**dadurch gekennzeichnet,**
**dass** der Kraftangriff am Kopf (3) der Schraube (3) als Sechskant (11), Innensechsrund (13), Innensechskant (14), Außenzwölfkant (15) oder Außensechsrund (16) ausgebildet ist.

4. Schraubengarnitur für Aluminiumkonstruktionen und -tragwerke im Aluminiumbau nach Anspruch 1,
**dadurch gekennzeichnet,**
**dass** der Kraftangriff an der Mutter (8) als Sechskant (12), Außenzwölfkant (17) oder Außensechsrund (18) ausgestaltet ist.

5. Schraubengarnitur für Aluminiumkonstruktionen und -tragwerke im Aluminiumbau nach Anspruch 1, **dadurch gekennzeichnet, dass** die dem Kopf (4) der Schraube (3) zugewandte Stirnseite der Unterlegscheibe (7) der Unterkopfgeometrie der Schraube (3) angepasst ausgeführt ist.

6. Schraubengarnitur für Aluminiumkonstruktionen und -tragwerke im Aluminiumbau nach Anspruch 5,
**dadurch gekennzeichnet,**
**dass** die Unterkopfgeometrie der Schraube (3) einen Radius (10) aufweist und die Stirnseite der Unterlegscheibe (7) eine Fase (9) beinhaltet.
